(19) Europäisches Patentamt
European Patent Office
Office européen des brevets

(11) EP 4 672 037 A1

(12) **EUROPEAN PATENT APPLICATION**
published in accordance with Art. 153(4) EPC

(43) Date of publication:
**31.12.2025 Bulletin 2026/01**

(21) Application number: **23929324.4**

(22) Date of filing: **30.03.2023**

(51) International Patent Classification (IPC):
**G06F 16/958** (2019.01)

(52) Cooperative Patent Classification (CPC):
**G06F 16/958**

(86) International application number:
**PCT/CN2023/085186**

(87) International publication number:
**WO 2024/197728 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Aktiengesellschaft
80333 München (DE)**

(72) Inventors:
• **LIU, Xinyue
  Beijing 100102 (CN)**
• **LI, Rui
  Beijing 100102 (CN)**

(74) Representative: **Isarpatent
Patent- und Rechtsanwälte
Barth Hassa Peckmann & Partner mbB
Friedrichstraße 31
80801 München (DE)**

(54) **METHOD AND APPARATUS FOR DETERMINING SIMILARITY BETWEEN WEBPAGES, METHOD AND APPARATUS FOR IDENTIFYING NETWORK ASSETS, AND DEVICE AND MEDIUM**

(57)    Provided are a method and apparatus for determining a similarity between webpages, a method and apparatus for identifying network assets, and an electronic device and a storage medium. The method for determining a similarity between webpages comprises: acquiring metadata of a first webpage, a hyper text markup language source code of the first webpage and a script file structure of the first webpage; determining a hyper text markup language structure tree of the first webpage on the basis of the hyper text markup language source code of the first webpage; determining a first similarity between the hyper text markup language structure tree of the first webpage and a hyper text markup language structure tree of a second webpage; determining a second similarity between the script file structure of the first webpage and a script file structure of the second webpage; determining a third similarity between the metadata of the first webpage and metadata of the second webpage; and determining a similarity between the first webpage and the second webpage on the basis of the first similarity, the second similarity and the third similarity.

FIG. 1

# EP 4 672 037 A1

## Description

### TECHNICAL FIELD

The present invention relates to the technical field of cybersecurity, and in particular, to a method and apparatus for determining a similarity between webpages, a method and apparatus for identifying network assets, and device and medium.

### BACKGROUND

With the rapid development of network technology, the importance of cybersecurity is increasing. How to effectively perform fingerprint identification and risk management of network assets is a huge challenge. Fingerprint information of a network asset usually includes software information and version information. In a practical application, a large number of network assets are developed by a third party. Therefore, it is difficult to comprehensively obtain fingerprint information.

Currently, a webpage is identified mainly by analyzing metadata such as hyper text transfer protocol (HTTP) header information, and fingerprint information of the webpage is determined based on a webpage identification result. However, according to this method, it is difficult to identify a webpage with incomplete metadata. For example, it is difficult to identify a webpage with hidden HTTP header information.

### SUMMARY

Embodiments of the present invention provide methods and apparatuses for determining a webpage similarity and identifying network assets, an electronic device, and a storage medium.

A method for determining a webpage similarity includes:

obtaining metadata of a first webpage, hyper text markup language (HTML) source code of the first webpage, and a script file structure of the first webpage;
determining an HTML structure tree of the first webpage based on the HTML source code of the first webpage;
determining a first similarity between the HTML structure tree of the first webpage and an HTML structure tree of a second webpage;
determining a second similarity between the script file structure of the first webpage and a script file structure of the second webpage;
determining a third similarity between the metadata of the first webpage and metadata of the second webpage; and
determining a similarity between the first webpage and the second webpage based on the first similarity, the second similarity, and the third similarity.

It can be seen that in the embodiments of the present invention, a webpage similarity is determined by combining an HTML structure tree, a script file structure, and metadata of a webpage, and the webpage is no longer identified only by using the metadata, thereby improving webpage identification.

In one embodiment, the determining an HTML structure tree of the first webpage based on the HTML source code of the first webpage includes:

constructing an original HTML structure tree of the first webpage based on the HTML source code of the first webpage;
removing a predetermined number of layers of nodes from the original HTML structure tree in a bottom-to-top direction; and
determining a remaining HTML structure tree after the removal as the HTML structure tree of the first webpage.

It can be seen that when the similarity of the HTML structure tree is calculated, a top-level structure of the HTML structure tree is reserved, and a highly different part at the bottom of the HTML structure tree is removed, so that identification accuracy of complex webpages can be improved and identification robustness can be enhanced.

In one embodiment, the determining a first similarity between the HTML structure tree of the first webpage and an HTML structure tree of a second webpage includes:

determining a maximum matching node number between the HTML structure tree of the first webpage and the HTML structure tree of the second webpage;
determining a first node number in the HTML structure tree of the first webpage;
determining a second node number in the HTML structure tree of the second webpage; and

determining the first similarity based on the maximum matching node number, the first node number, and the second node number.

Therefore, a first similarity is determined based on a maximum matching node number of HTML structure trees of compared objects (a first webpage and a second webpage) and respective node numbers, thereby improving calculation efficiency.

In one embodiment, the determining a second similarity between the script file structure of the first webpage and a script file structure of the second webpage includes:

determining a maximum matching node number between the script file structure of the first webpage and the script file structure of the second webpage;

determining a first node number in the script file structure of the first webpage;

determining a second node number in the script file structure of the second webpage; and

determining the second similarity based on the maximum matching node number, the first node number, and the second node number.

Therefore, a second similarity may be conveniently determined based on a maximum matching node number of script file structures of compared objects (a first webpage and a second webpage) and respective node numbers, thereby improving calculation efficiency.

In one embodiment, the determining a similarity between the first webpage and the second webpage based on the first similarity, the second similarity, and the third similarity includes:

determining a first product of the first similarity and a predetermined first weight;

determining a second product of the second similarity and a predetermined second weight;

determining a third product of the third similarity and a predetermined third weight; and

determining a sum of the first product, the second product, and the third product, as a similarity between the first webpage and the second webpage.

The third weight is greater than the first weight, and the first weight is greater than the second weight.

Therefore, the similarity between the first webpage and the second webpage is accurately calculated by using a weighting algorithm. In addition, the maximum third weight ensures that the metadata has a maximum impact factor, and the first weight is greater than the second weight, ensuring importance of an impact factor of the HTML structure tree.

In one embodiment, the method further includes:

determining fingerprint information of the second webpage as fingerprint information of the first webpage when the similarity between the first webpage and the second webpage is greater than a preset threshold.

Therefore, fingerprint information of webpages may be conveniently determined based on similarity calculation between the webpages.

An apparatus for determining a webpage similarity includes:

an obtaining module, configured to obtain metadata of a first webpage, HTML source code of the first webpage, and a script file structure of the first webpage;

a first determining module, configured to determine an HTML structure tree of the first webpage based on the HTML source code of the first webpage;

a second determining module, configured to determine a first similarity between the HTML structure tree of the first webpage and an HTML structure tree of a second webpage;

a third determining module, configured to determine a second similarity between the script file structure of the first webpage and a script file structure of the second webpage;

a fourth determining module, configured to determine a third similarity between the metadata of the first webpage and metadata of the second webpage; and

a fifth determining module, configured to determine a similarity between the first webpage and the second webpage based on the first similarity, the second similarity, and the third similarity.

It can be seen that in the embodiments of the present invention, a webpage similarity is determined by combining an HTML structure tree, a script file structure, and metadata of a webpage, and the webpage is no longer identified only by using the metadata, thereby improving webpage identification.

A method for identifying network assets includes:

determining a first webpage included in a to-be-identified network asset;

determining a webpage set including a plurality of second webpages, where each second webpage corresponds to a respective identified network asset;

determining a similarity between the first webpage and each second webpage in the webpage set, where the determining a similarity between the first webpage and each second webpage includes: obtaining metadata of the first webpage, HTML source code of the first webpage, and a script file structure of the first webpage; determining an HTML structure tree of the first webpage based on the HTML source code of the first webpage; determining a first similarity between the HTML structure tree of the first webpage and an HTML structure tree of each second webpage; determining a second similarity between the script file structure of the first webpage and a script file structure of each second webpage; determining a third similarity between the metadata of the first webpage and metadata of each second webpage; and determining a similarity between the first webpage and each second webpage based on the first similarity, the second similarity, and the third similarity; and

determining fingerprint information of an identified network asset corresponding to a second webpage having a maximum similarity with the first webpage as fingerprint information of the to-be-identified network asset.

It can be seen that the fingerprint information of the network asset may be conveniently identified based on a process of comparing webpage similarities.

In one embodiment, the determining an HTML structure tree of the first webpage based on the HTML source code of the first webpage includes: constructing an original HTML structure tree of the first webpage based on the HTML source code of the first webpage; removing a predetermined number of layers of nodes from the original HTML structure tree in a bottom-to-top direction; and determining a remaining HTML structure tree after the removal as the HTML structure tree of the first webpage.

It can be seen that when the similarity of the HTML structure tree is calculated, a top-level structure of the HTML structure tree is reserved, and a highly different part at the bottom of the HTML structure tree is removed, so that identification accuracy of complex webpages can be improved and identification robustness can be enhanced.

In one embodiment, the determining a similarity between the first webpage and each second webpage based on the first similarity, the second similarity, and the third similarity includes: determining a first product of the first similarity and a predetermined first weight; determining a second product of the second similarity and a predetermined second weight; determining a third product of the third similarity and a predetermined third weight; and determining a sum of the first product, the second product, and the third product, as a similarity between the first webpage and each second webpage, where the third weight is greater than the first weight, and the first weight is greater than the second weight.

Therefore, the similarity between the first webpage and the second webpage is accurately calculated by using a weighting algorithm. In addition, the maximum third weight ensures that the metadata has a maximum impact factor, and the first weight is greater than the second weight, ensuring importance of an impact factor of the HTML structure tree.

An apparatus for identifying network assets includes:

a webpage determining module, configured to determine a first webpage included in a to-be-identified network asset;

a webpage set determining module, configured to determine a webpage set including a plurality of second webpages, where each second webpage corresponds to a respective identified network asset;

a similarity determining module, configured to determine a similarity between the first webpage and each second webpage in the webpage set, where the determining a similarity between the first webpage and each second webpage includes: obtaining metadata of the first webpage, HTML source code of the first webpage, and a script file structure of the first webpage; determining an HTML structure tree of the first webpage based on the HTML source code of the first webpage; determining a first similarity between the HTML structure tree of the first webpage and an HTML structure tree of each second webpage; determining a second similarity between the script file structure of the first webpage and a script file structure of each second webpage; determining a third similarity between the metadata of the first webpage and metadata of each second webpage; and determining a similarity between the first webpage and each second webpage based on the first similarity, the second similarity, and the third similarity; and

a fingerprint determining module, configured to determine fingerprint information of an identified network asset corresponding to a second webpage having a maximum similarity with the first webpage as fingerprint information of the to-be-identified network asset.

An electronic device includes:

a processor; and

a memory configured to store executable instructions of the processor.

The processor is configured to read the executable instructions from the memory, and execute the executable instructions to implement the method for determining a webpage similarity or the method for identifying network assets according to any one of the foregoing content.

A computer-readable storage medium has computer instructions stored therein. The computer instructions, when executed by a processor, implement the method for determining a webpage similarity or the method for identifying network assets according to any one of the foregoing content.

A computer program product includes a computer program. The computer program, when executed by a processor, implements the method for determining a webpage similarity or the method for identifying network assets according to any one of the foregoing content.

**BRIEF DESCRIPTION OF THE DRAWINGS**

To enable a person of ordinary skill in the art to understand the foregoing and other features and advantages of the present invention more clearly, exemplary embodiments according to the present invention are described in detail below with reference to the accompany drawings.

FIG. 1 is a flowchart of a method for determining a webpage similarity according to an embodiment of the present invention.
FIG. 2 is a schematic diagram of an original HTML structure tree according to an embodiment of the present invention.
FIG. 3 is a first schematic diagram of a node-removed HTML structure tree according to an embodiment of the present invention.
FIG. 4 is a second schematic diagram of a node-removed HTML structure tree according to an embodiment of the present invention.
FIG. 5 is a schematic diagram of a JavaScript (JS) structure tree according to an embodiment of the present invention.
FIG. 6 is a flowchart of a method for identifying network assets according to an embodiment of the present invention.
FIG. 7 is a structural diagram of an apparatus for determining a webpage similarity according to an embodiment of the present invention.
FIG. 8 is a structural diagram of an apparatus for identifying network assets according to an embodiment of the present invention.
FIG. 9 is an exemplary structural diagram of an electronic device according to an embodiment of the present invention.

Reference numerals:

| No. | Meanings |
| --- | --- |
| 101-106 | Steps |
| 10/11/12/13/21/22/23/31/32/33 | Node |
| 301 | Removed portion |
| 302 | Remaining portion |
| 401 | Removed portion |
| 402 | Remaining portion |
| 501-504 | Steps |
| 600 | Apparatus for determining webpage similarity |
| 601 | First determining module |
| 602 | Second determining module |
| 603 | Third determining module |
| 604 | Fourth determining module |
| 605 | Fifth determining module |
| 606 | Angle |
| 700 | Apparatus for identifying network assets |
| 701 | Webpage determining module |
| 702 | Webpage set determining module |

(continued)

| No. | Meanings |
|---|---|
| 703 | Similarity determining module |
| 704 | Fingerprint determining module |
| 800 | Electronic device |
| 801 | Processor |
| 802 | Memory |

## DETAILED DESCRIPTION

To make the objective, technical solutions, and advantages of the present invention clearer, the present invention is further described in detail below by using embodiments.

For brief and intuitive description, the following describes the solutions of the present invention by describing several representative embodiments. A large number of details in the embodiments are only used to help understand the solutions of the present invention. However, obviously, embodiment of the technical solutions of the present invention may not be limited to these details. To avoid unnecessarily obscuring the solutions of the present invention, some embodiments are not described in detail, but only frameworks are provided. In the following description, "including" means "including, but not limited to", and "according to ..." means "at least according to ..., but not limited to only according to ...". Because of the Chinese language habit, when the number of an element is not particularly specified below, it means that the number of the element may be one or more, or may be understood as at least one.

In embodiments of the present invention, a webpage similarity is determined by jointly using metadata, HTML structures, and script file structures of webpages. In addition, network asset fingerprint may be accurately identified based on a similarity calculation result of the webpages.

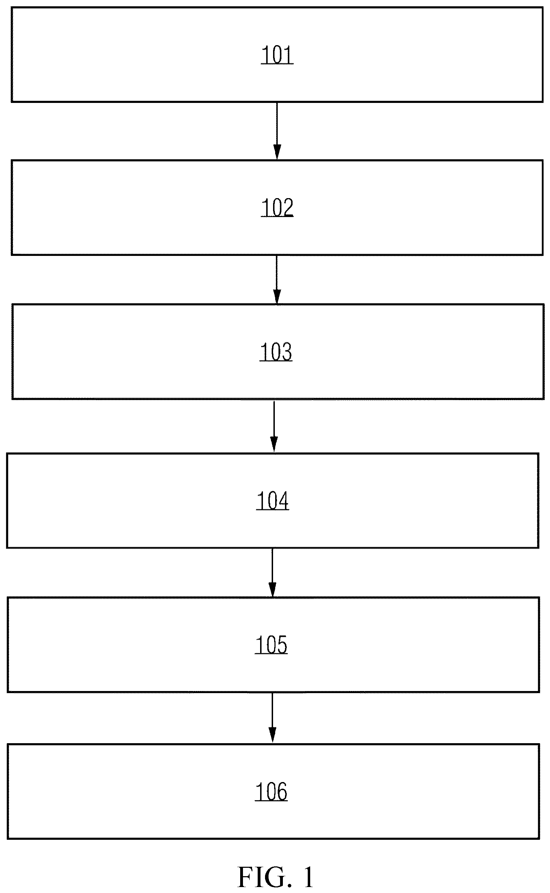

FIG. 1 is a flowchart of a method for determining a webpage similarity according to an embodiment of the present invention. As shown in FIG. 1, the method for determining a webpage similarity includes the following steps.

Step 101: Obtain metadata of a first webpage, HTML source code of the first webpage, and a script file structure of the first webpage.

Herein, the first webpage is a webpage whose similarity with a second webpage needs to be determined. For example, the first webpage may be a webpage where fingerprint needs to be identified. When it is determined, based on the similarity with the second webpage, that the first webpage is relatively similar to the second webpage (for example, the similarity is greater than a predetermined threshold), fingerprint information of the second webpage may be determined as fingerprint information of the first webpage.

The metadata of the first webpage may include at least one piece of information such as a uniform resource locator (URL) of the first webpage, header information of an HTTP request and response of the first webpage, and particular page information (e.g., robot.txt) of the first webpage.

The metadata of the first webpage may be acquired in an active access manner or a passive obtaining manner. In the active access manner, a request is sent to the first webpage to actively obtain a response message including the metadata of the first webpage, and the metadata of the first webpage is parsed out from the response message. In the passive obtaining manner, when a user browses the first webpage, the response message including the metadata of the first webpage may be passively obtained, and the metadata of the first webpage is parsed out from the response message.

Code that enables, by using an HTML grammar rule, content such as pictures and text included in the first webpage to be displayed in a browser is the HTML source code of the first webpage. In one embodiment, after the first webpage is opened, "View a source file" may be selected by clicking a right button of a mouse to pop up a notepad, and content of the notepad is the HTML source code of the first webpage. In another embodiment, a "View source code" control is selected from a status bar or a toolbar of the browser that presents the first webpage. To be specific, the HTML source code of the first webpage may be presented.

The script file structure of the first webpage, for example, a script file directory of the first webpage, may be obtained by parsing the first webpage. The script file of the first webpage may be implemented as a JS file. JS is a lightweight, interpretive, or instant compilation programming language with a function priority, and is usually used to add various dynamic functions to a webpage. In an HTML, JS code is usually located between a <script> and a </script> tag.

The foregoing exemplarily describes a typical example of obtaining metadata of a first webpage, HTML source code of the first webpage, and a script file structure of the first webpage. A person skilled in the art may realize that such descriptions are merely exemplary, and are not intended to limit the scope of protection of the embodiments of the present invention.

Step 102: Determine an HTML structure tree of the first webpage based on the HTML source code of the first webpage.

In one embodiment, the HTML structure tree of the first webpage is constructed for the HTML source code of the first webpage by using a depth first search (DFS) algorithm.

Considering that the HTML structure tree of the first webpage usually includes a plurality of layers of nodes, if the fingerprint of the first webpage is determined by directly using a similarity obtained by comparing an original HTML structure tree (i.e., a complete HTML structure tree) of the first webpage with a known HTML structure tree, varying HTML page structures cannot be well adapted to. Therefore, in this embodiment of the present invention, a node is further deleted for an original HTML structure tree, thereby enhancing identification robustness.

In one embodiment, the determining an HTML structure tree of the first webpage based on the HTML source code of the first webpage includes: constructing an original HTML structure tree of the first webpage based on the HTML source code of the first webpage; removing a predetermined number of layers of nodes from the original HTML structure tree in a bottom-to-top direction; and determining a remaining HTML structure tree after the removal as the HTML structure tree of the first webpage.

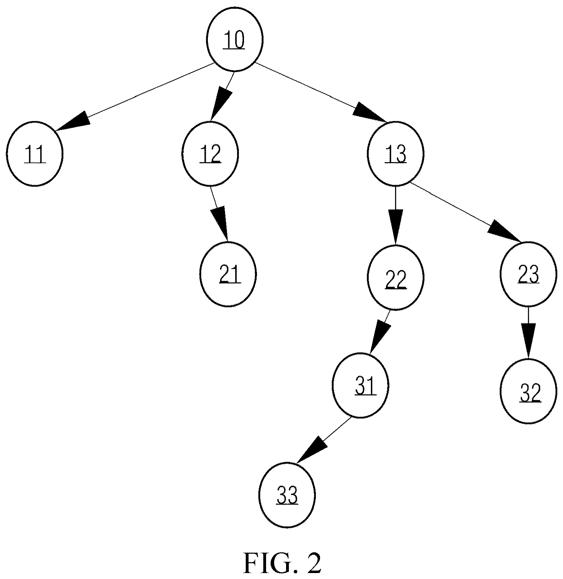

FIG. 2 is a schematic diagram of an original HTML structure tree according to an embodiment of the present invention. In FIG. 2, an original HTML structure tree determined based on HTML source code of a first webpage includes node 10, node 11, node 12, node 13, node 21, node 22, node 23, node 31, node 32, and node 33. Node 10 is a root node. Node 11, node 12, and node 13 are located on a first layer in a top-to-bottom direction. Node 21, node 22, and node 23 are located on a second layer. Node 31 and node 32 are located on a third layer. Node 33 is located on a fourth layer. Values of the structure tree include HTML tag information, and values of a class and an ID attribute.

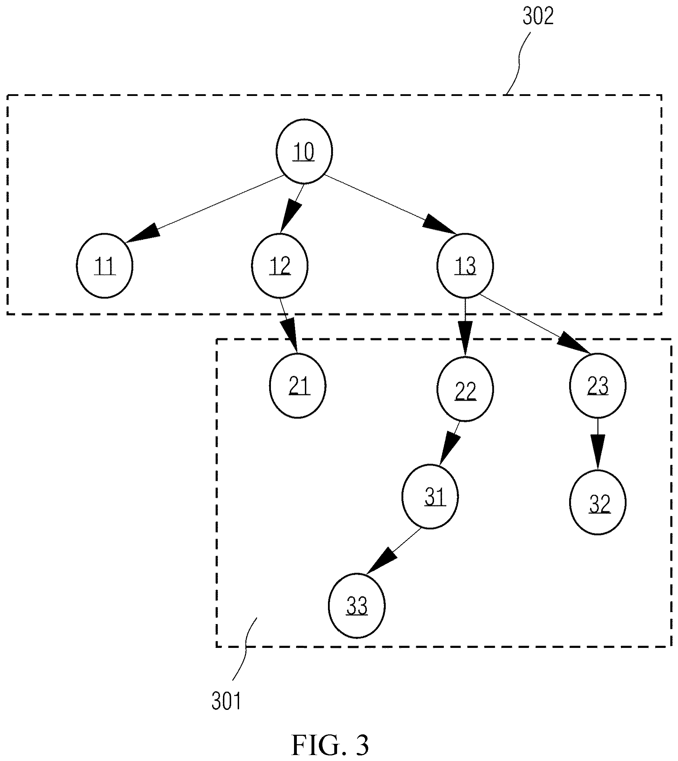

FIG. 3 is a first schematic diagram of a node-removed HTML structure tree according to an embodiment of the present invention. In FIG. 3, in a bottom-to-top direction, three layers are removed from the original HTML structure tree shown in FIG. 2. To be specific, the nodes in the second layer, the third layer, and the fourth layer are removed. Therefore, a removed portion 301 includes: node 21, node 22, node 23, node 31, node 32, and node 33. A remaining portion 302 includes: node 10, node 11, node 12, and node 13. The remaining portion 302 is a node-removed HTML structure tree.

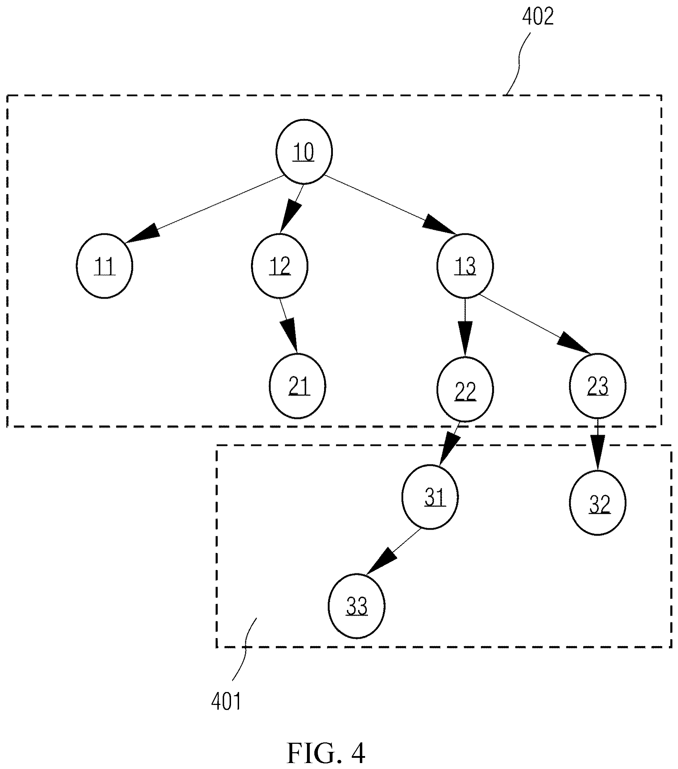

FIG. 4 is a second schematic diagram of a node-removed HTML structure tree according to an embodiment of the present invention. In FIG. 4, in a bottom-to-top direction, nodes on two layers are removed from the original HTML structure tree shown in FIG. 2. To be specific, the nodes on the third layer and the fourth layer are removed. Therefore, a removed portion 401 includes: node 31, node 32, and node 33. A removed portion 402 includes: node 10, node 11, node 12, node 13, node 21, node 22, and node 23. The remaining portion 402 is a node-removed HTML structure tree.

Therefore, when the similarity of the HTML structure tree is calculated, a top-level structure of the HTML structure tree is reserved, and a highly different part at the bottom of the HTML structure tree is removed, so that identification accuracy of complex webpages can be improved and identification robustness can be enhanced.

The foregoing exemplarily describes an exemplary embodiment of removing a node from an original HTML structure tree. A person skilled in the art may realize that such descriptions are merely exemplary, and are not intended to limit the scope of protection of the embodiments of the present invention.

Step 103: Determine a first similarity between the HTML structure tree of the first webpage and an HTML structure tree of a second webpage.

Herein, the second webpage is a similarity comparison object of the first webpage. For example, the second webpage may be a webpage where fingerprint has been confirmed.

In one embodiment, the determining a first similarity between the HTML structure tree of the first webpage and an HTML structure tree of a second webpage includes: determining a maximum matching node number between the HTML structure tree of the first webpage and the HTML structure tree of the second webpage; determining a first node number in the HTML structure tree of the first webpage; determining a second node number in the HTML structure tree of the second webpage; and determining the first similarity based on the maximum matching node number, the first node number, and the second node number. Therefore, a first similarity is determined based on a maximum matching node number of HTML structure trees of compared objects (a first webpage and a second webpage) and respective node numbers, thereby improving calculation efficiency.

For example, the HTML structure tree of the first webpage is denoted as $T$, and the HTML structure tree of the second webpage is denoted as $X_i$. The first similarity between the HTML structure tree of the first webpage and the HTML structure tree of the second webpage is $Similarity(T, X_i)$. $Similarity(T, X_i) = \frac{SimpleTreeMatching(T, X_i)}{(|T| + |X_i|)/2}$, where $|T|$ is the node number in the HTML structure tree $T$ of the first webpage, $|X_i|$ is the node number in the HTML structure tree $X_i$ of the second webpage, and $SimpleTreeMatching(T, X_i)$ represents the maximum matching node number between $T$ and $X_i$.

Step 104: Determine a second similarity between the script file structure of the first webpage and a script file structure of the second webpage.

Herein, a script file structure tree of the first webpage may be constructed according to the script file structure of the first webpage (e.g., a directory of a script file of the first webpage).

For example, when the script file of the first webpage is a JS file, a directory structure thereof is:

/A/B/C/D
/A/B/E/F/G
/A/B/H
/A/I/J
/A/I/K

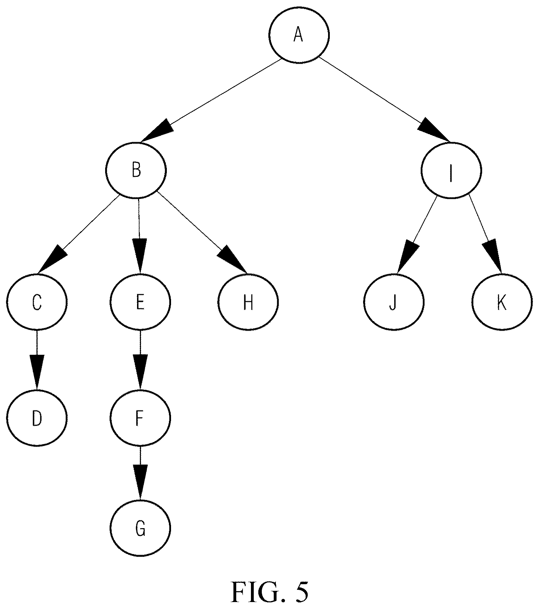

Based on the foregoing directory structure, FIG. 5 is a schematic diagram of a JS structure tree according to an embodiment of the present invention. In the structure tree in FIG. 5, node A is a root node of the JS structure tree. Based on the directory structure, child nodes of the root node are node B and node I. Child nodes of node B are node C, node E, and node H. Child nodes of node I are node J and node K. A child node of node C is node D. A child node of node E is node F. A child node of node F is node G.

In one embodiment, the determining a second similarity between the script file structure of the first webpage and a script file structure of the second webpage includes: determining a maximum matching node number between the script file structure of the first webpage and the script file structure of the second webpage; determining a first node number in the script file structure of the first webpage; determining a second node number in the script file structure of the second webpage; and determining the second similarity based on the maximum matching node number, the first node number, and the second node number. Therefore, a second similarity may be conveniently determined based on a maximum matching node number of script file structures of compared objects (a first webpage and a second webpage) and respective node numbers, thereby improving calculation efficiency.

For example, the script file structure tree of the first webpage is denoted as $G$, and the script file structure tree of the second webpage is denoted as $Y_i$. The second similarity between the script file structure tree of the first webpage and the script file structure tree of the second webpage is $Similarity(G, Y_i)$.

$$Similarity(G, Y_i) = \frac{SimpleTreeMatching(G, Y_i)}{(|G| + |Y_i|)/2}$$ , where $|G|$ is the node number in the script file structure tree

$G$ of the first webpage, $|X_i|$ is the node number in the script file structure tree $Y_i$ of the second webpage, and $SimpleTreeMatching(G, Y_i)$ represents the maximum matching node number between $G$ and $Y_i$.

Step 105: Determine a third similarity between the metadata of the first webpage and metadata of the second webpage.

Herein, the metadata of the first webpage may be compared with the metadata of the second webpage, to determine a third similarity between the metadata of the first webpage and the metadata of the second webpage. For example, a rule base may be established based on the metadata (e.g., a URL, header information of an HTTP request and response, and particular page information) of the second webpage, and then a matching degree between the metadata of the first webpage and the rule base is checked to determine the third similarity. For example, the matching manner may include: accurate matching, extension matching, path matching, default matching, or the like.

Step 106: Determine a similarity between the first webpage and the second webpage based on the first similarity, the second similarity, and the third similarity.

In one embodiment, the determining a similarity between the first webpage and the second webpage based on the first similarity, the second similarity, and the third similarity includes: determining a first product of the first similarity and a predetermined first weight; determining a second product of the second similarity and a predetermined second weight; determining a third product of the third similarity and a predetermined third weight; and determining a sum of the first product, the second product, and the third product, as a similarity between the first webpage and the second webpage, where the third weight is greater than the first weight, and the first weight is greater than the second weight. Therefore, the similarity between the first webpage and the second webpage can be accurately calculated by using a weighting algorithm. In addition, the maximum third weight ensures that the metadata has a maximum impact factor, and the first weight is greater than the second weight, further ensuring importance of an impact factor of the HTML structure tree.

It can be seen that in the embodiments of the present invention, a webpage similarity is determined by combining an HTML structure tree, a script file structure, and metadata of a webpage, and the webpage is no longer identified only by using the metadata, thereby improving webpage identification. When a website exposes limited information, fingerprint information of a network asset may be better identified by comparing a similarity between an HTML structure tree and a JS file structure, thereby reducing a false positive rate and a false negative rate.

In one embodiment, the method further includes: determining fingerprint information of the second webpage as fingerprint information of the first webpage when the similarity between the first webpage and the second webpage is greater than a preset threshold. Therefore, fingerprint information of webpages may be conveniently determined based on similarity calculation between the webpages.

In one embodiment, the fingerprint information of the network asset including the webpage may be determined based on the procedure shown in FIG. 1. For example, it is assumed that there are n second pages. Each second page corresponds to respective software with known fingerprint information. The software is $\{X_1, X_2, X_3, ..., X_n\}$, respectively.

Rule matching is performed between the metadata of the first webpage and a feature database established by metadata of each piece of known software, including a field of an extended URL, a field included in an HTTP request header, and a corresponding value. A rule matching eigenvector between the first webpage and the software $\{X_1, X_2, X_3, ..., X_n\}$ with known fingerprint information is $[a_1, a_2, ..., a_n]^T$, where a weight of $[a_1, a_2, ..., a_n]^T$ is $\alpha_1$.

The similarity between the HTML structure tree of the first webpage and the HTML structure tree of each piece of software $\{X_1, X_2, X_3, ..., X_n\}$ with known fingerprint information is calculated, to obtain a similarity vector of $[S_1, S_2, ..., S_n]^T$ between the HTML trees of the first webpage and all pieces of software $\{X_1, X_2, X_3, ..., X_n\}$ with known fingerprint information, where a weight of $[s_1, s_2, ..., s_n]^T$ is $\alpha_2$.

After being obtained, the JS file structure tree of the first webpage is compared with the JS file structure tree of each piece of software $\{X_1, X_2, X_3, ..., X_n\}$ with known fingerprint information, to obtain a JS similarity vector of $[j_1, j_2, ..., j_n]^T$ between the first webpage and all pieces of software $\{X_1, X_2, X_3, ..., X_n\}$ with known fingerprint information, where a weight of $[j_1, j_2, ..., j_n]^T$ is $\alpha_3$, $\alpha_1$ is greater than $\alpha_2$, and $\alpha_2$ is greater than $\alpha_3$.

A similarity value between the first webpage and all pieces of software $\{X_1, X_2, X_3, ..., X_n\}$ with known fingerprint information is $\vec{M} = \alpha_1 \cdot [a_1, a_2, ..., a_n]^T + \alpha_2 \cdot [s_1, s_2, ..., s_n]^T + \alpha_1 \cdot [j_1, j_2, ..., j_n]^T$. The fingerprint information of the first webpage is fingerprint information of software with known fingerprint information corresponding to a maximum value in the similarity value $\vec{M}$. In addition, after the fingerprint information of the first webpage is determined, a threat intelligence database may be periodically updated based on the fingerprint information of the first webpage. For example, security vulnerabilities and threat information threatening the first webpage may be updated, and feature information of the first webpage may further be updated.

By comprehensively mastering an open port, a protocol, a domain name, a device type, a model, a manufacturer, an application name, a version, an operating system, a WEB service, an application component, a development framework, a scripting language, and a CMS-related network asset, knowing, based on an identified asset, whether vulnerability risk protection in a cyberspace asset is valid, impact distribution of vulnerabilities in an identified network asset fingerprint library is evaluated, to assist an industry supervision department in mastering the current status of asset security and effectively resolving potential risks. Based on the foregoing description, an embodiment of the present invention further provides a method for identifying network assets.

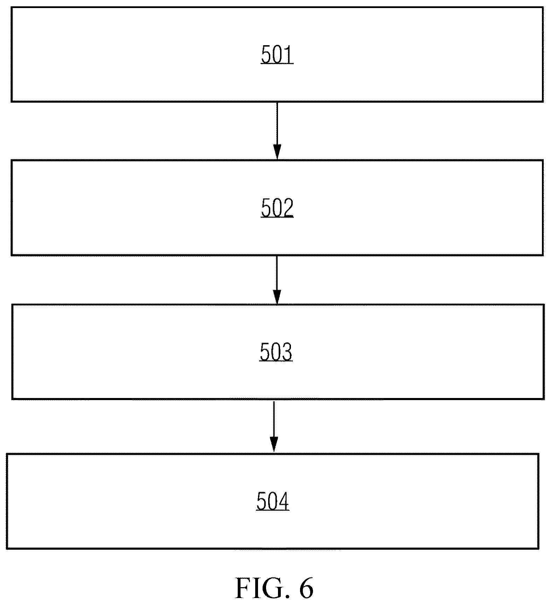

FIG. 6 is a flowchart of a method for identifying network assets according to an embodiment of the present invention. As shown in FIG. 6, the method includes the following steps:

Step 501: Determine a first webpage included in a to-be-identified network asset.

For example, the to-be-identified network asset is application software to be identified (i.e., having fingerprint information to be determined). The first webpage may be any page of the application software, and is preferably a home page.

Step 502: Determine a webpage set including a plurality of second webpages, where each second webpage corresponds to a respective identified network asset.

The identified network asset is application software already identified (i.e., having fingerprint information already determined). For example, each second page is a home page of respective application software. For example, assuming that the network assets are identified as application software 1 to application software 10, the webpage set includes 10 second webpages. The 10 second webpages are respectively home pages of application software 1 to application software 10.

Step 503: Determine a similarity between the first webpage and each second webpage in the webpage set, where the determining a similarity between the first webpage and each second webpage includes: obtaining metadata of the first webpage, HTML source code of the first webpage, and a script file structure of the first webpage; determining an HTML structure tree of the first webpage based on the HTML source code of the first webpage; determining a first similarity between the HTML structure tree of the first webpage and an HTML structure tree of each second webpage; determining a second similarity between the script file structure of the first webpage and a script file structure of each second webpage; determining a third similarity between the metadata of the first webpage and metadata of each second webpage; and determining a similarity between the first webpage and each second webpage based on the first similarity, the second similarity, and the third similarity.

Herein, based on the procedure shown in FIG. 1, the similarity between the first webpage and each second webpage may be calculated. For example, assuming that the network assets are identified as application software 1 to application software 10, the webpage set includes 10 second webpages. The 10 second webpages are respectively home pages of application software 1 to application software 10. Based on the procedure shown in FIG. 1, similarities between the first webpage and the 10 second webpages may be calculated. To be specific, 10 similarities are calculated.

Step 504: Determine fingerprint information of an identified network asset corresponding to a second webpage having a maximum similarity with the first webpage as fingerprint information of the to-be-identified network asset.

Continuing the foregoing example, fingerprint information of an identified network asset corresponding to a second webpage having a maximum value in the 10 similarities is determined as the fingerprint information of the to-be-identified network asset, thereby completing identification of the to-be-identified network asset.

For example, fingerprint information of an asset specifically includes: an open port, a protocol, an application name, a version, an operating system type, a WEB service response header, a title, a keyword, an application component, a development framework, a scripting language, a CMS, and complete response body information.

It can be seen that the fingerprint information of the network asset may be conveniently identified based on a process of comparing webpage similarities.

In one embodiment, the determining an HTML structure tree of the first webpage based on the HTML source code of the first webpage includes: constructing an original HTML structure tree of the first webpage based on the HTML source code of the first webpage; removing a predetermined number of layers of nodes from the original HTML structure tree in a bottom-to-top direction; and determining a remaining HTML structure tree after the removal as the HTML structure tree of the first webpage. It can be seen that when the similarity of the HTML structure tree is calculated, a top-level structure of the HTML structure tree is reserved, and a highly different part at the bottom of the HTML structure tree is removed, so that identification accuracy of complex webpages can be improved and identification robustness is enhanced.

In one embodiment, the determining a similarity between the first webpage and each second webpage based on the first similarity, the second similarity, and the third similarity includes: determining a first product of the first similarity and a predetermined first weight; determining a second product of the second similarity and a predetermined second weight; determining a third product of the third similarity and a predetermined third weight; and determining a sum of the first product, the second product, and the third product, as a similarity between the first webpage and each second webpage, where the third weight is greater than the first weight, and the first weight is greater than the second weight. Therefore, the similarity between the first webpage and the second webpage is accurately calculated by using a weighting algorithm. In addition, the maximum third weight ensures that the metadata has a maximum impact factor, and the first weight is greater than the second weight, ensuring importance of an impact factor of the HTML structure tree.

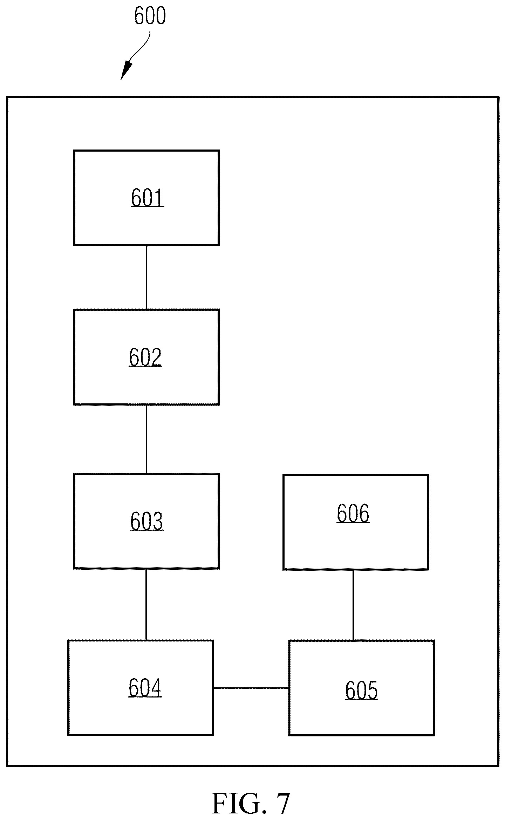

FIG. 7 is a structural diagram of an apparatus for determining a webpage similarity according to an embodiment of the present invention. As shown in FIG. 7, the apparatus 600 for determining a webpage similarity includes: an obtaining module 601, configured to obtain metadata of a first webpage, HTML source code of the first webpage, and a script file structure of the first webpage; a first determining module 602, configured to determine an HTML structure tree of the first webpage based on the HTML source code of the first webpage; a second determining module 603, configured to determine a first similarity between the HTML structure tree of the first webpage and an HTML structure tree of a second webpage; a third determining module 604, configured to determine a second similarity between the script file structure of the first webpage and a script file structure of the second webpage; a fourth determining module 605, configured to determine a third similarity between the metadata of the first webpage and metadata of the second webpage; and a fifth determining module 606, configured to determine a similarity between the first webpage and the second webpage based on the first similarity, the second similarity, and the third similarity.

In one embodiment, the first determining module 602 is configured to: construct an original HTML structure tree of the first webpage based on the HTML source code of the first webpage; remove a predetermined number of layers of nodes from the original HTML structure tree in a bottom-to-top direction; and determine a remaining HTML structure tree after the removal as the HTML structure tree of the first webpage.

In one embodiment, the second determining module 603 is configured to: determine a maximum matching node number between the HTML structure tree of the first webpage and the HTML structure tree of the second webpage; determine a first node number in the HTML structure tree of the first webpage; determine a second node number in the HTML structure tree of the second webpage; and determine the first similarity based on the maximum matching node number, the first node number, and the second node number.

In one embodiment, the third determining module 604 is configured to: determine a maximum matching node number between the script file structure of the first webpage and the script file structure of the second webpage; determine a first node number in the script file structure of the first webpage; determine a second node number in the script file structure of the second webpage; and determine the second similarity based on the maximum matching node number, the first node number, and the second node number.

In one embodiment, the fifth determining module 606 is configured to: determine a first product of the first similarity and a predetermined first weight; determine a second product of the second similarity and a predetermined second weight; determine a third product of the third similarity and a predetermined third weight; and determine a sum of the first product, the second product, and the third product, as a similarity between the first webpage and the second webpage, where the third weight is greater than the first weight, and the first weight is greater than the second weight.

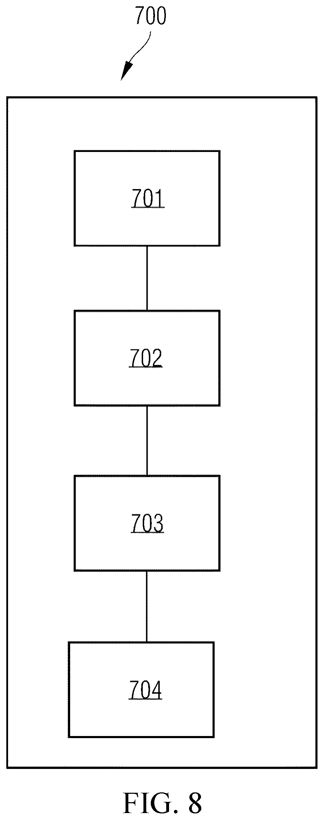

FIG. 8 is a structural diagram of an apparatus for identifying network assets according to an embodiment of the present invention. As shown in FIG. 8, the apparatus 700 for identifying network assets includes: a webpage determining module 701, configured to determine a first webpage included in a to-be-identified network asset; a webpage set determining module 702, configured to determine a webpage set including a plurality of second webpages, where each second webpage corresponds to a respective identified network asset; a similarity determining module 703, configured to determine a similarity between the first webpage and each second webpage in the webpage set, where the determining a similarity between the first webpage and each second webpage includes: obtaining metadata of the first webpage, HTML source code of the first webpage, and a script file structure of the first webpage; determining an HTML structure tree of the first webpage based on the HTML source code of the first webpage; determining a first similarity between the HTML structure tree of the first webpage and an HTML structure tree of each second webpage; determining a second similarity between the script file structure of the first webpage and a script file structure of each second webpage; determining a third similarity between the metadata of the first webpage and metadata of each second webpage; and determining a similarity between the first webpage and each second webpage based on the first similarity, the second similarity, and the third similarity; and a fingerprint determining module 704, configured to determine fingerprint information of an identified network asset corresponding to a second webpage having a maximum similarity with the first webpage as fingerprint information of the to-be-identified network asset.

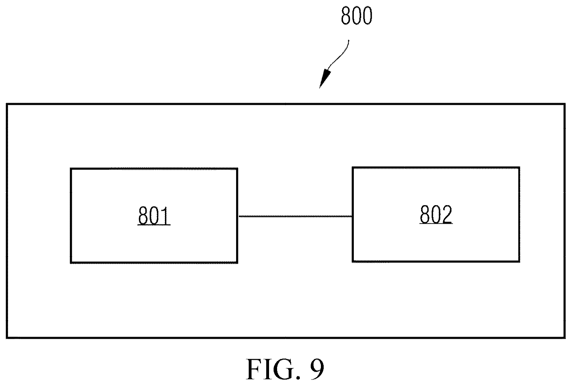

An embodiment of the present invention further provides an electronic device that has a processor-memory architecture. FIG. 9 is a structural diagram of an electronic device according to an embodiment of the present invention. As shown in FIG. 9, the electronic device 800 includes a processor 801, a memory 802, and a computer program that is stored in the memory 802 and may be run on the processor 801. The computer program, when executed by the processor 801, implements the foregoing method for determining a webpage similarity or method for identifying network assets. The memory 802 may be specifically implemented as various storage media such as an electrically erasable programmable read-only memory (EEPROM), a flash memory, and a programmable read-only memory (PROM). The processor 801 may be implemented to include one or more central processing units or one or more field programmable gate arrays, where the field programmable gate arrays are integrated into one or more central processing unit cores. Specifically, the central processing unit or the central processing unit core may be implemented as a CPU, an MCU, a DSP, or the like.

It should be noted that not all steps and modules in the aforementioned processes and structural diagrams are mandatory. Some steps or modules may be omitted based on actual requirements. The execution order of the steps is not fixed and may be adjusted as required. The division of modules is merely based on functional distinctions for descriptive convenience. In practical embodiment, the functions of one module may be distributed across a plurality of modules, and a plurality of modules may be integrated into a single module. These modules may be located within the same device or be distributed across different devices.

Hardware modules in various embodiments may be implemented mechanically or electronically. For example, a hardware module may include permanently designed circuits or logic devices (e.g., dedicated processors such as FPGA or ASIC) for performing particular operations. The hardware module may alternatively include programmable logic devices or circuits (e.g., general-purpose or other programmable processors) temporarily configured by software to perform particular operations. The choice of whether to implement a hardware module mechanically, using dedicated permanent circuits, or using temporarily configured circuits (e.g., configured via software) may be determined based on cost and time considerations.

The above descriptions are merely preferred embodiments of the present invention and are not intended to limit the scope of protection of the present invention. Any modifications, equivalent replacements, or improvements made within the spirit and principles of the present invention shall fall within the scope of protection of the present invention.

**Claims**

1. A method for determining a webpage similarity, comprising:

    obtaining (101) metadata of a first webpage, hyper text markup language (HTML) source code of the first webpage, and a script file structure of the first webpage;
    determining (102) an HTML structure tree of the first webpage based on the HTML source code of the first webpage;
    determining (103) a first similarity between the HTML structure tree of the first webpage and an HTML structure tree of a second webpage;
    determining (104) a second similarity between the script file structure of the first webpage and a script file structure of the second webpage;
    determining (105) a third similarity between the metadata of the first webpage and metadata of the second webpage; and
    determining (106) a similarity between the first webpage and the second webpage based on the first similarity, the second similarity, and the third similarity.

2. The method according to claim 1, wherein the determining (102) an HTML structure tree of the first webpage based on the HTML source code of the first webpage comprises:

constructing an original HTML structure tree of the first webpage based on the HTML source code of the first webpage;
removing a predetermined number of layers of nodes from the original HTML structure tree in a bottom-to-top direction; and
determining a remaining HTML structure tree after the removal as the HTML structure tree of the first webpage.

3. The method according to claim 2, wherein the determining (103) a first similarity between the HTML structure tree of the first webpage and an HTML structure tree of a second webpage comprises:

determining a maximum matching node number between the HTML structure tree of the first webpage and the HTML structure tree of the second webpage;
determining a first node number in the HTML structure tree of the first webpage;
determining a second node number in the HTML structure tree of the second webpage; and
determining the first similarity based on the maximum matching node number, the first node number, and the second node number.

4. The method according to claim 1, wherein the determining (104) a second similarity between the script file structure of the first webpage and a script file structure of the second webpage comprises:

determining a maximum matching node number between the script file structure of the first webpage and the script file structure of the second webpage;
determining a first node number in the script file structure of the first webpage;
determining a second node number in the script file structure of the second webpage; and
determining the second similarity based on the maximum matching node number, the first node number, and the second node number.

5. The method according to any one of claims 1 to 4, wherein the determining (106) a similarity between the first webpage and the second webpage based on the first similarity, the second similarity, and the third similarity comprises:

determining a first product of the first similarity and a predetermined first weight;
determining a second product of the second similarity and a predetermined second weight;
determining a third product of the third similarity and a predetermined third weight; and
determining a sum of the first product, the second product, and the third product, as a similarity between the first webpage and the second webpage,
wherein the third weight is greater than the first weight, and the first weight is greater than the second weight.

6. The method according to any one of claims 1 to 4, further comprising:
determining fingerprint information of the second webpage as fingerprint information of the first webpage when the similarity between the first webpage and the second webpage is greater than a preset threshold.

7. An apparatus for determining a webpage similarity, comprising:

an obtaining module (601), configured to obtain metadata of a first webpage, HTML source code of the first webpage, and a script file structure of the first webpage;
a first determining module (602), configured to determine an HTML structure tree of the first webpage based on the HTML source code of the first webpage;
a second determining module (603), configured to determine a first similarity between the HTML structure tree of the first webpage and an HTML structure tree of a second webpage;
a third determining module (604), configured to determine a second similarity between the script file structure of the first webpage and a script file structure of the second webpage;
a fourth determining module (605), configured to determine a third similarity between the metadata of the first webpage and metadata of the second webpage; and
a fifth determining module (606), configured to determine a similarity between the first webpage and the second webpage based on the first similarity, the second similarity, and the third similarity.

8. A method for identifying network assets, comprising:

determining (501) a first webpage comprised in a to-be-identified network asset;

determining (502) a webpage set comprising a plurality of second webpages, each second webpage corresponding to a respective identified network asset;

determining (503) a similarity between the first webpage and each second webpage in the webpage set, wherein the determining (503) a similarity between the first webpage and each second webpage comprises: obtaining metadata of the first webpage, HTML source code of the first webpage, and a script file structure of the first webpage; determining an HTML structure tree of the first webpage based on the HTML source code of the first webpage; determining a first similarity between the HTML structure tree of the first webpage and an HTML structure tree of each second webpage; determining a second similarity between the script file structure of the first webpage and a script file structure of each second webpage; determining a third similarity between the metadata of the first webpage and metadata of each second webpage; and determining a similarity between the first webpage and each second webpage based on the first similarity, the second similarity, and the third similarity; and

determining (504) fingerprint information of an identified network asset corresponding to a second webpage having a maximum similarity with the first webpage as fingerprint information of the to-be-identified network asset.

9. The method according to claim 8, wherein
the determining an HTML structure tree of the first webpage based on the HTML source code of the first webpage comprises: constructing an original HTML structure tree of the first webpage based on the HTML source code of the first webpage; removing a predetermined number of layers of nodes from the original HTML structure tree in a bottom-to-top direction; and determining a remaining HTML structure tree after the removal as the HTML structure tree of the first webpage.

10. The method according to claim 8, wherein the determining a similarity between the first webpage and each second webpage based on the first similarity, the second similarity, and the third similarity comprises: determining a first product of the first similarity and a predetermined first weight; determining a second product of the second similarity and a predetermined second weight; determining a third product of the third similarity and a predetermined third weight; and determining a sum of the first product, the second product, and the third product, as a similarity between the first webpage and each second webpage, the third weight being greater than the first weight and the first weight being greater than the second weight.

11. An apparatus for identifying network assets, comprising:

a webpage determining module (701), configured to determine a first webpage comprised in a to-be-identified network asset;

a webpage set determining module (702), configured to determine a webpage set comprising a plurality of second webpages, each second webpage corresponding to a respective identified network asset;

a similarity determining module (703), configured to determine a similarity between the first webpage and each second webpage in the webpage set, wherein the determining a similarity between the first webpage and each second webpage comprises: obtaining metadata of the first webpage, HTML source code of the first webpage, and a script file structure of the first webpage; determining an HTML structure tree of the first webpage based on the HTML source code of the first webpage; determining a first similarity between the HTML structure tree of the first webpage and an HTML structure tree of each second webpage; determining a second similarity between the script file structure of the first webpage and a script file structure of each second webpage; determining a third similarity between the metadata of the first webpage and metadata of each second webpage; and determining a similarity between the first webpage and each second webpage based on the first similarity, the second similarity, and the third similarity; and

a fingerprint determining module (704), configured to determine fingerprint information of an identified network asset corresponding to a second webpage having a maximum similarity with the first webpage as fingerprint information of the to-be-identified network asset.

12. An electronic device, comprising:

a processor (801); and

a memory (802) configured to store executable instructions of the processor (801),

the processor (801) being configured to read the executable instructions from the memory (802), and execute the executable instructions to implement the method for determining a webpage similarity according to any one of claims 1 to 6 or the method for identifying network assets according to any one of claims 8 to 10.

13. A computer-readable storage medium, having computer instructions stored therein, wherein the computer instructions, when executed by a processor, implement the method for determining a webpage similarity according to any one of claims 1 to 6 or the method for identifying network assets according to any one of claims 8 to 10.

14. A computer program product, comprising a computer program, wherein the computer program, when executed by a processor, implements the method for determining a webpage similarity according to any one of claims 1 to 6 or the method for identifying network assets according to any one of claims 8 to 10.

FIG. 1

FIG. 2

FIG. 3

FIG. 4

FIG. 5

FIG. 6

600

601

602

603

606

604

605

FIG. 7

700

```
┌─────────────────────────────────┐
│                                 │
│         ┌───────────────┐       │
│         │               │       │
│         │      701      │       │
│         │               │       │
│         └───────┬───────┘       │
│                 │               │
│         ┌───────┴───────┐       │
│         │               │       │
│         │      702      │       │
│         │               │       │
│         └───────┬───────┘       │
│                 │               │
│         ┌───────┴───────┐       │
│         │               │       │
│         │      703      │       │
│         │               │       │
│         └───────┬───────┘       │
│                 │               │
│         ┌───────┴───────┐       │
│         │               │       │
│         │      704      │       │
│         │               │       │
│         └───────────────┘       │
│                                 │
└─────────────────────────────────┘
```

FIG. 8

800

801

802

FIG. 9

## INTERNATIONAL SEARCH REPORT

| International application No. |
| --- |
| **PCT/CN2023/085186** |

| A. | CLASSIFICATION OF SUBJECT MATTER |
| --- | --- |

G06F16/958(2019.01)i

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS, CNTXT, ENTXT, ENTXTC, VEN, WPABS: 网页, 页面, 超文本标记, 代码, 脚本, 相似度, 节点, 结构, 树, webpage, page, html, code, script, similar, node, structure, tree

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 107357716 A (FUJITSU LIMITED) 17 November 2017 (2017-11-17) description, paragraphs 2-214 | 1-14 |
| X | CN 106021383 A (LETV HOLDINGS (BEIJING) CO., LTD. et al.) 12 October 2016 (2016-10-12) description, paragraphs 2-142 | 1-14 |
| A | CN 104462152 A (SHENZHEN TENCENT COMPUTER SYSTEMS CO., LTD.) 25 March 2015 (2015-03-25) entire document | 1-14 |
| A | CN 109657208 A (RICOH CO., LTD.) 19 April 2019 (2019-04-19) entire document | 1-14 |
| A | CN 112818279 A (HILLSTONE NETWORKS COMMUNICATION TECHNOLOGY CO., LTD.) 18 May 2021 (2021-05-18) entire document | 1-14 |
| A | US 2008010292 A1 (POOLA KRISHNA LEELA) 10 January 2008 (2008-01-10) entire document | 1-14 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 November 2023** | **24 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/085186**

### C.   DOCUMENTS CONSIDERED TO BE RELEVANT

| Category* | Citation of document, with indication, where appropriate, of the relevant passages | Relevant to claim No. |
|---|---|---|
| A | US 2009049062 A1 (CHITRAPURA KRISHNA PRASAD et al) 19 February 2009 (2009-02-19)<br>    entire document | 1-14 |

Form PCT/ISA/210 (second sheet) (July 2022)

**INTERNATIONAL SEARCH REPORT**
Information on patent family members

International application No.

**PCT/CN2023/085186**

| Patent document cited in search report | | | Publication date (day/month/year) | Patent family member(s) | | | Publication date (day/month/year) |
|---|---|---|---|---|---|---|---|
| CN | 107357716 | A | 17 November 2017 | None | | | |
| CN | 106021383 | A | 12 October 2016 | None | | | |
| CN | 104462152 | A | 25 March 2015 | WO | 2015039553 | A1 | 26 March 2015 |
| | | | | CN | 104462152 | B | 09 April 2019 |
| CN | 109657208 | A | 19 April 2019 | CN | 109657208 | B | 04 July 2023 |
| CN | 112818279 | A | 18 May 2021 | None | | | |
| US | 2008010292 | A1 | 10 January 2008 | US | 2008072140 | A1 | 20 March 2008 |
| | | | | US | 8046681 | B2 | 25 October 2011 |
| | | | | US | 7676465 | B2 | 09 March 2010 |
| US | 2009049062 | A1 | 19 February 2009 | US | 7941420 | B2 | 10 May 2011 |

Form PCT/ISA/210 (patent family annex) (July 2022)